# EUROPEAN PATENT APPLICATION

(11) **EP 4 679 549 A1**
(43) Date of publication of application: **14.01.2026**
(21) Application number: 24771192.2
(22) Date of filing: 13.03.2024
(51) Int. Cl.: H01M 10/056, H01M 10/0569, H01M 10/0565, H01M 10/052

(54) **ELECTROLYTE FOR SECONDARY BATTERY, METHOD FOR PREPARING SAME, AND LITHIUM SECONDARY BATTERY COMPRISING SAME**

(30) Priority: 14.03.2023 KR 20230033384
(71) Applicant: SK On Co., Ltd., Seoul 03161 (KR)
(72) Inventor: Yi, Eun Jeong, Daejeon 34124 (KR); Kim, Kyeong Joon, Daejeon 34124 (KR); Kim, Min Kyu, Daejeon 34124 (KR); Lee, Seung Hwan, Daejeon 34124 (KR)
(74) Representative: Prüfer & Partner mbB Patentanwälte · Rechtsanwälte
(86) International application number: PCT/KR2024/003233
(87) International publication number: WO 2024/191193

(57) **Abstract**

An electrolyte for a lithium secondary battery according to embodiments of the present disclosure may include a lithium salt, a composite membrane including an inorganic electrolyte and an organic binder, and a flame retardant polymer. A lithium secondary battery according to embodiments of the present disclosure may include a cathode, an anode disposed to face the cathode, and an electrolyte layer disposed between the cathode and the anode which includes the electrolyte for a secondary battery.

## Description

### [Technical Field]

The present disclosure relates to an electrolyte for a secondary battery, a method for preparing the same, and a lithium secondary battery including the electrolyte. More particularly, the present disclosure relates to an electrolyte for a secondary battery including an inorganic electrolyte, a method for preparing the same, and a lithium secondary battery including the electrolyte.

### [Background Art]

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric cars.

Examples of the secondary battery include a lithium secondary battery, a nickelcadmium battery, and a nickel-hydrogen battery. Among these, lithium secondary batteries are actively being researched and developed due to their high operating voltage, high energy density per unit weight, and advantages in charging speed and weight reduction.

Since commercially available lithium secondary batteries have mainly employed liquid electrolytes to date, there are safety issues such as leakage, ignition, and explosion due to sudden environmental changes, including temperature fluctuations, external impacts and the like. To address these problems, research has been conducted to solidify the electrolyte, thereby enhancing stability and increasing energy density.

All-solid-state batteries may include solid-state electrolytes such as gel polymers, oxides, sulfides, or composite polymers as the electrolyte. Accordingly, stability against ignition and explosion caused by external impacts or external environmental fluctuations may be enhanced.

The electrolyte for a secondary battery of the present disclosure, the method for preparing the same, and the lithium secondary battery may be widely applied in green technology fields, such as electric vehicles, battery charging stations, as well as solar power generation, wind power generation, and the like, which use the batteries. The electrolyte for a secondary battery of the present disclosure, the method for preparing the same, and the lithium secondary battery may be used in eco-friendly electric vehicles, hybrid vehicles, and the like, which are aimed at mitigating climate change by reducing air pollution and greenhouse gas emissions.

### [Summary of Invention]

### [Problems to be Solved by Invention]

An object of the present disclosure is to provide an electrolyte for a secondary battery with improved mechanical properties and high-temperature stability.

Another object of the present disclosure is to provide a method for preparing an electrolyte for a secondary battery with improved mechanical properties and high-temperature stability.

Still another object of the present disclosure is to provide a lithium secondary battery with improved electrochemical stability.

### [Means for Solving Problems]

An electrolyte for a secondary battery according to exemplary embodiments may include: a lithium salt; a composite membrane including an inorganic electrolyte and an organic binder; and a flame retardant compound. The content of the inorganic electrolyte, based on the total volume of the composite membrane, may be 50% by volume to 95% by volume.

In some embodiments, the inorganic electrolyte may include an oxide-based solid electrolyte.

In some embodiments, the content of the organic binder, based on the total volume of the composite membrane, may be 5% by volume to 50% by volume.

In some embodiments, the volume ratio of the content of the organic binder to the content of the inorganic electrolyte may be 0.05 to 0.5.

In some embodiments, the volume ratio of the content of the flame retardant compound to the content of the inorganic electrolyte may be 0.01 to 0.3.

In some embodiments, the flame retardant compound may include at least one of a phosphorus-containing functional group and fluorine atoms.

In some embodiments, the phosphorus-containing functional group may include at least one of a phosphate group, a phosphite group, a phosphonate group, and a phosphazene group.

A lithium secondary battery according to exemplary embodiments may include: a cathode; an anode disposed to face the cathode; and an electrolyte layer disposed between the cathode and the anode which includes the above-described electrolyte for a secondary battery.

In a method for preparing an electrolyte for a secondary battery according to exemplary embodiments, an inorganic electrolyte, an organic binder and a solvent may be mixed to prepare a mixed slurry. The mixed slurry may be dried to prepare a composite membrane. The composite membrane may be impregnated with a flame retardant polymer electrolyte to prepare an electrolyte for a secondary battery. The volume ratio of the content of the organic binder to the content of the inorganic electrolyte may be 0.01 to 0.5.

In some embodiments, the inorganic electrolyte may include an oxide-based solid electrolyte.

In some embodiments, the content of the inorganic electrolyte, based on the total volume of the composite membrane, may be 50% by volume to 95% by volume.

In some embodiments, the step of impregnating the composite membrane with a flame retardant polymer electrolyte may include impregnating the composite membrane with a mixture including a flame retardant monomer and an electrolyte solution, and curing the mixture.

In some embodiments, the electrolyte solution may include a lithium salt.

In some embodiments, the mixture may further include a thermal initiator, and curing the mixture may include heat-treating the mixture.

In some embodiments, the mixture may further include a photoinitiator, and curing the mixture may include irradiating the mixture with light.

### [Advantageous effects]

The electrolyte for a secondary battery prepared according to exemplary embodiments of the present disclosure may have improved mechanical properties. Accordingly, the stability of the electrolyte layer may be enhanced, and its flame retardancy may be improved.

In addition, the electrolyte for a secondary battery prepared according to exemplary embodiments of the present disclosure may have self-extinguishing properties. Accordingly, even after repeated charging/discharging of the secondary battery, high-temperature stability and ignition stability of the electrolyte layer may be improved.

A lithium secondary battery according to exemplary embodiments of the present disclosure may include the electrolyte for a secondary battery, thereby improving safety at both room-temperature and high-temperature, and enhancing electrical characteristics.

### [Brief Description of Drawings]

FIG. 1 is a schematic view illustrating the structure of an electrolyte for a secondary battery according to exemplary embodiments.
FIG. 2 is a schematic flowchart for describing processes of a method for preparing an electrolyte for a secondary battery according to exemplary embodiments.
FIG. 3 is a photograph showing combustion of an electrolyte layer for a secondary battery manufactured according to exemplary examples of the present disclosure.
FIG. 4 is a photograph showing the electrolyte layer for a secondary battery manufactured according to exemplary examples of the present disclosure after combustion.

### [Mode for Carrying out Invention]

According to exemplary embodiments, a method for preparing an electrolyte for a secondary battery including a lithium salt, an inorganic oxide, an organic binder, and a flame retardant polymer, and an electrolyte for a secondary battery prepared by the method are provided. In addition, a lithium secondary battery including an electrolyte layer that includes the electrolyte for a secondary battery is also provided.

Hereinafter, embodiments of the present disclosure will be described in detail with reference to the accompanying drawings. However, these are merely illustrative and the present disclosure is not limited to the specific embodiments described as examples.

Unless otherwise defined herein, when a portion such as a layer, film, thin film, region, or plate, etc. is present "on" or "above" another portion, it may include not only the case where the portion is present "directly on" the other portion, but also the case where another portion is present between them.

If there is an isomer of a compound represented by a formula used herein, the compound represented by the corresponding formula refers to the representative formula including such isomers.

The term "flame retardancy" as used herein refers to the ability to prevent or suppress combustion, wherein a sample burns while in contact with a flame (ignition source) but self-extinguishes once the flame is removed. Flame retardancy may be evaluated based on the time required for the flame to be extinguished after removing a torch used to supply a flame of a certain amount of heat to the sample for 1 second or more. It may be evaluated that a shorter extinguishing times indicates better flame retardancy.

Specifically, the flame retardant polymer may be prepared in the form of a glass fiber-impregnated film or a self-supporting film having a diameter of 19 mm, and when ignited by supplying a flame of a certain amount of heat for 1 second or more using a torch and then removing the torch, it may be extinguished within 2 seconds, specifically within 1 second, and more specifically within 0.5 seconds.

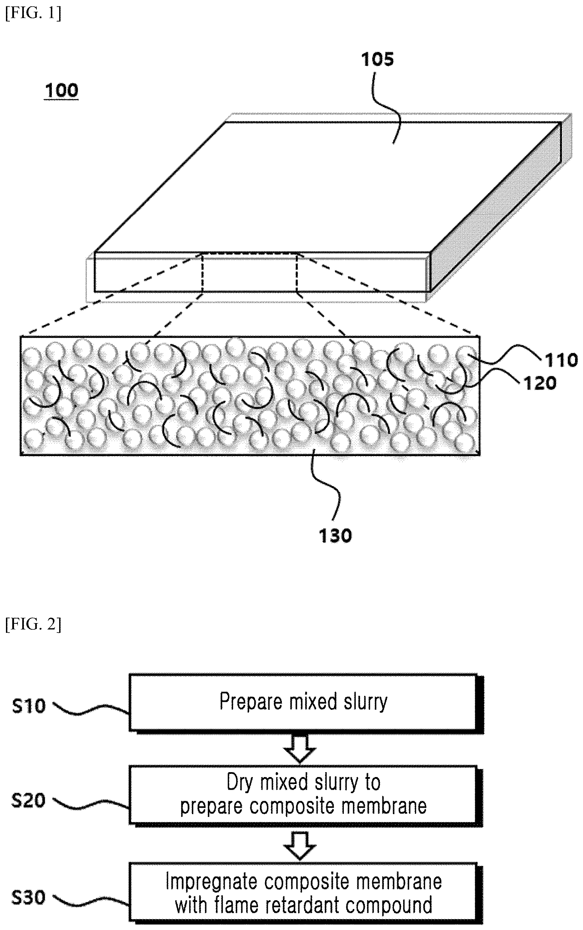

FIG. 1 is a schematic view illustrating an electrolyte for a secondary battery according to exemplary embodiments.

Referring to FIG. 1, the electrolyte for a secondary battery (hereinafter, also abbreviated as "electrolyte") may include a lithium salt, a composite membrane 105, and a flame retardant polymer 130. In some embodiments, the electrolyte may include the lithium salt, the composite membrane 105, the flame retardant polymer 130, and an electrolyte solution.

According to exemplary embodiments, the composite membrane 105 may include an inorganic electrolyte 110 and an organic binder 120. For example, the inorganic electrolyte 110 and the organic binder 120 may be mixed and dispersed within the composite membrane 105, and may be in physical contact or bonded with each other. The composite membrane may be a free-standing membrane.

The inorganic electrolyte 110 and the organic binder 120 of the composite membrane 105 may be unsintered, and the composite membrane 105 may not include a sintered body of the inorganic electrolyte 110 and/or a sintered body of the organic binder 120.

The lithium salt may be represented by, for example, Li⁺X⁻. As an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

In some embodiments, the inorganic electrolyte 110 may be an oxide-based solid electrolyte. For example, the oxide-based solid electrolyte may include an ion-conductive compound containing a metal or oxygen. For example, the oxide-based solid electrolytes may include LLTO compounds, LLZO compounds, LLZTO compounds such as Li_{6.4}La₃Zr_{1.4}Ta_{0.6}O₁₂, Li₆La₂CaTa₂O₁₂, Li₆La₂ANb₂O₁₂ (A is Ca or Sr), Li₂Nd₃TeSbO₁₂, Li₃BO_{2.5}N_{0.5}, Li₉SiAlO₈, LAGP compounds, LATP compounds, Li₁₊ₓTi₂₋ₓAlₓSi_{y}(PO₄)₃ (0≤x≤1, 0≤y≤1), LiAlₓZr₂₋ₓ(PO₄)₃ (0≤x≤1), LiTiₓZr₂₋ₓ(PO₄)₃ (0≤x≤1) LISICON compounds, LIPON compounds, perovskite compounds, NASICON compounds, and metal oxides such as Al₂O₃, ZnO₂, Ce₂O₂, TiO₂, ZrO₂, HfO₂, MnO₂, MgO, WO₂, and V₂O₅.

In one embodiment, the inorganic electrolyte 110 may include an oxide-based solid electrolyte containing lithium. For example, the oxide-based solid electrolyte containing lithium may include an LLTO compound, an LLZO compound (e.g., a garnet-type LLZO compound), an LLZTO compound, a NASICON compound, a LATP compound, or a perovskite compound, etc. Accordingly, the ionic conductivity and mechanical strength of the electrolyte 100 may be improved, thereby suppressing lithium dendrite growth, and enhancing high-temperature stability and cycle life characteristics.

The organic binder 120 may include at least one binder selected from the group consisting of a polyvinyl compound-based binder, a cellulose-based binder, an acrylic polymer-based binder, and a copolymer resin binder.

The organic binder 120 may include, for example, polyvinyl alcohol (PVA), polyvinyl butyral (PVB), polyvinylpyrrolidone (PVP), carboxymethylcellulose (CMC), vinylpyrrolidone/vinylacetate (VP/VA) copolymer resin, polyvinylidene fluoride (PVDF), polyvinylidene fluoride-co-hexafluoropropylene (PVDF-co-HFP), polyacrylonitrile (PAN), polymethyl methacrylate (PMMA), acrylonitrile-butadiene rubber (NBR), polybutadiene rubber (BR), styrene-butadiene rubber (SBR), polyacrylic acid-based binder, poly(3,4-ethylenedioxythiophene) (PEDOT) and the like.

In some embodiments, the organic binder 120 may be an organic polymer having a glass transition temperature (T_{g}) of 100 °C to 600 °C, 100 °C to 500 °C, or 100 °C to 300 °C. In one embodiment, the organic binder may include a PVDF-based binder. By using a binder having a glass transition temperature (Tg) within the above range, the organic binder 120 may uniformly distribute and fix the inorganic electrolyte 110, and other components without requiring a separate heat treatment at high temperatures during the preparation of the electrolyte, thereby stabilizing the electrolyte 100.

In some embodiments, the flame retardant polymer 130 may include a phosphorus-containing functional group. In one embodiment, the phosphorus-containing functional group may include at least one of a phosphate group, a phosphite group, a phosphonate group, and a phosphazene group.

For example, the flame retardant polymer 130 may be a polymer formed by polymerizing or copolymerizing a flame retardant monomer that includes at least one of a phosphate group, a phosphite group, a phosphonate group, and a phosphazene group. Accordingly, side reactions between the flame retardant polymer 130 and the inorganic electrolyte 110, the organic binder 120, and compounds such as a lithium salt or the electrolyte solution, may be suppressed. Furthermore, the flame retardant polymer 130 may include a phosphorus-containing functional group, thereby blocking oxygen during combustion and preventing thermal runaway.

In some embodiments, the flame retardant polymer 130 may include fluorine atoms. For example, the flame retardant polymer 130 may be a polymer formed by polymerizing or copolymerizing a flame retardant monomer containing fluorine atoms. The fluorine atoms may form radicals in the event of a fire, thereby inhibiting the propagation of the combustion reaction. Accordingly, the flame retardant properties of the electrolyte 100 may be improved by the flame retardant polymer 130.

In one embodiment, the flame retardant polymer 130 may include both a phosphorus-containing functional group and fluorine atoms. For example, the flame retardant polymer 130 may be a polymer formed by polymerizing or copolymerizing a flame retardant monomer containing both a phosphorus-containing functional group and fluorine atoms. Alternatively, the flame retardant polymer 130 may be a polymer formed by copolymerizing a flame retardant monomer containing a phosphorus-containing functional group and a flame retardant monomer containing fluorine atoms. Accordingly, the flame retardancy of the electrolyte 100 may be further improved by the flame retardant polymer 130.

In one embodiment, the flame retardant polymer 130 may include a monomer, an oligomer, a polymer, or a mixture thereof.

In some embodiments, the flame retardant polymer 130 may be a compound formed by polymerizing or copolymerizing a flame retardant monomer having a thermally reactive functional group and/or a photoreactive functional group. For example, the flame retardant monomer may be a compound containing a thermally reactive functional group that is polymerized by heat. For example, the flame retardant monomer may be a compound containing a photoreactive functional group that is polymerized upon irradiation with light. For example, (meth)acrylate groups, acrylic groups, ether groups, alcohol groups, alkoxy groups, and the like may be used as a thermosetting functional group and/or a photocurable functional group.

According to exemplary embodiments, the content of the inorganic electrolyte 110, based on the total volume of the composite membrane 105, may be 50% by volume ("vol%") to 95 vol%.

If the content of the inorganic electrolyte 110 based on the total volume of the composite membrane 105 exceeds 95 vol%, the low content of the organic binder 120 may weaken particle aggregation, thereby reducing the flexibility of the composite membrane. Consequently, the mechanical stability of the composite membrane 105 may be degraded. In addition, the high content of the inorganic electrolyte 110 may make it difficult to prepare the composite membrane 105 in the form of a thin film.

If the content of the inorganic electrolyte 110 based on the total volume of the composite membrane 105 is less than 50 vol%, the ionic conductivity of the composite membrane 105 may be degraded. Consequently, the output characteristics and initial capacity efficiency of the composite membrane 105 may be degraded. Further, when the content of the organic binder 120 is relatively increased, it may be difficult to maintain the shape of the composite membrane upon burning due to the combustion of the organic binder 120.

Within the above content range, the flame retardancy and mechanical stability of the composite membrane 105 may be improved, while the output characteristics and initial capacity efficiency may be enhanced.

In some embodiments, the content of the inorganic electrolyte 110, based on the total volume of the composite membrane 105, may be 60 vol% to 95 vol%, or 70 vol% to 95 vol%, 70 vol% to 90 vol%, 75 vol% to 90 vol%, or 75 vol% to 85 vol%. For example, the content of the oxide-based solid electrolyte, based on the total volume of the composite membrane 105, may be within the above volume percentage range (vol%). Within the above range, the ionic conductivity of the electrolyte 100 may be further improved through the high ionic conductivity of the inorganic electrolyte 110. For example, the mechanical characteristics of the electrolyte 100 may be further improved by the oxide-based solid electrolyte, and the membrane structure of the composite membrane 105 may be maintained without collapsing.

In some embodiments, the content of the organic binder 120, based on the total volume of the composite membrane 105, may be 5 vol% to 50 vol%, 5 vol% to 40 vol%, or 5 vol% to 30 vol%. In one embodiment, the content of the organic binder 120, based on the total volume of the composite membrane 105, may be 10 vol% to 30 vol%, 10 vol% to 25 vol%, or 15 vol% to 25 vol%. Within this range, the inorganic electrolyte 110 within the composite membrane 105 may be uniformly dispersed throughout the composite membrane 105, and the structure of the composite membrane 105 may be formed in a stable manner.

In one embodiment, the volume ratio of the content of the organic binder 120 to the content of the inorganic electrolyte 110 may be 0.05 to 0.5, 0.053 to 0.5, 0.08 to 0.5, 0.08 to 0.4, 0.08 to 0.3, or 0.1 to 0.3. Within this range, the stability of the composite membrane 105 structure may be improved by an increase in the content of the organic binder 120, while suppressing the decrease in ionic conductivity caused by a decrease in the content of the inorganic electrolyte 110.

In some embodiments, the volume ratio of the content of the flame retardant polymer 130 to the content of the inorganic electrolyte 110 may be 0.01 to 0.3, 0.05 to 0.3, 0.1 to 0.3, 0.1 to 0.25, or 0.15 to 0.25. Within this range, the ignition stability and high-temperature stability of the electrolyte 100 may be improved through the self-extinguishing properties of the flame retardant polymer 130. In addition, even if the organic binder 120 included in the composite membrane 105 ignites, the structure of the composite membrane 105 may be maintained by the flame retardant polymer 130.

FIG. 2 is a schematic flowchart for describing processes of a method for preparing an electrolyte for a secondary battery according to exemplary embodiments. Hereinafter, the method for preparing the above-described electrolyte for a secondary battery will be described with reference to FIG. 2.

Referring to FIG. 2, a mixed slurry may be prepared by mixing an inorganic electrolyte, an organic binder and a solvent (e.g., step S10).

In some embodiments, the inorganic electrolyte may be an oxide-based solid electrolyte. The oxide-based solid electrolyte may be the above-described oxide-based solid electrolyte. For example, the oxide-based solid electrolyte may be an oxide-based solid electrolyte containing lithium.

The organic binder may be the above-described organic binder. For example, the organic binder may be a PVB-based binder, a PVA-based binder, a PVDF-based binder or the like.

In some embodiments, the solvent usable herein may dissolve both the inorganic electrolyte and the organic binder. In one embodiment, the solvent may include an organic solvent. The organic solvent may include a solvent including at least one functional group selected from the group consisting of alcohol, ketone, amide, ester, ether, and aromatic hydrocarbon. For example, the organic solvent may include 2-propanol, toluene, terpineol, N-methyl-2-pyrrolidone (NMP) and the like. The solvent (or organic solvent) may be used alone or in combination of two or more thereof.

In one embodiment, the solvent may include two types of organic solvents used in combination. For example, the solvent may be a mixture of a first solvent and a second solvent that are miscible with each other from the above-described solvents. The first solvent and the second solvent may each dissolve at least one of the inorganic electrolyte and the organic binder. Accordingly, even if either the inorganic electrolyte or the organic binder is not dissolved in the first solvent, it may be dissolved and mixed in the second solvent.

In exemplary embodiments, the ratio of the organic binder content to the inorganic electrolyte content may be 0.05 to 0.5, 0.053 to 0.5, 0.08 to 0.5, 0.08 to 0.45, or 0.08 to 0.4 based on volume. For example, the inorganic electrolyte and the organic binder may be mixed with a solvent at a content ratio within the above range.

When the ratio of the organic binder to the inorganic electrolyte content is less than 0.05 based on volume, the composite membrane prepared from the mixed slurry may become more brittle, thereby degrading the mechanical stability of the composite membrane. When the ratio of the organic binder to the inorganic electrolyte content exceeds 0.5 based on volume, the ionic conductivity of the composite membrane may be reduced, thereby degrading its output characteristics and initial efficiency.

In some embodiments, the ratio of the organic binder to the inorganic electrolyte content may be 0.08 to 0.3, 0.09 to 0.3, or 0.1 to 0.3 based on volume. Accordingly, the mechanical stability, output characteristics, and initial efficiency of the composite membrane prepared from the slurry including the inorganic electrolyte and the organic binder may be further improved.

In some embodiments, the mixed slurry may further include additives such as a plasticizer or a dispersant. The additives may be organic additives.

The plasticizer may be, for example, a plasticizer having a phosphate ester, a phthalic acid ester, or a citric acid ester structure. The phosphate ester may include, for example, triphenyl phosphate (TPP), 4-biphenyl diphenyl phosphate (BDP), and tricresyl phosphate (TCP). The phthalic acid ester may include, for example, dimethyl phthalate (DMP), dibutyl phthalate (DBP), dioctyl phthalate (DOP), diphenyl phthalate (DPP), diethylhexyl phthalate (DEHP) and the like. The citric acid ester may include, for example, O-acetyl triethyl citrate (OACTE), O-acetyl tributyl citrate (OACTB) and the like.

The dispersant may include, for example, hydrogenated nitrile butadiene rubber (HNBR), polyvinylpyrrolidone (PVP), polylactic acid (PLA), polyglycolic acid (PGA) and the like.

According to exemplary embodiments, the mixed slurry may be dried to prepare a composite membrane (e.g., step S20). The mixed slurry may be cast onto a substrate (e.g., a glass substrate or a plastic substrate, etc.) and dried.

In some embodiments, the mixed slurry may be dried at a temperature of 60 °C to 400 °C, 60 °C to 300 °C, 80 °C to 300 °C, 100 °C to 300 °C, or 120 °C to 280 °C. Within this temperature range, the solvent included in the mixed slurry may vaporize, thereby drying the mixed slurry. In addition, the inorganic electrolyte and the organic binder included in the mixed slurry may be uniformly distributed within the mixed slurry, and the organic binder may be physically bonded to the inorganic electrolyte, thereby forming and maintaining the structure of the composite membrane.

In some embodiments, the mixed slurry may be dried for 30 minutes to 2 hours, 30 minutes to 1.5 hours, or 45 minutes to 1.25 hours. Within this range, the solvent within the mixed slurry may be vaporized and removed.

In some embodiments, the mixed slurry may not be sintered after drying. Accordingly, the organic binder may not be removed, thereby improving the elastic modulus of the composite membrane. Consequently, the cycle life characteristics of the electrolyte that includes the composite membrane may be improved.

In some embodiments, the content of the inorganic electrolyte, based on the total volume of the composite membrane, may be 50 vol% to 95 vol%, 60 vol% to 95 vol%, or 70 vol% to 95 vol%. Within this range, the mechanical properties of the composite membrane may be improved by the inorganic electrolyte.

In one embodiment, the content of the inorganic electrolyte, based on the total volume of the composite membrane, may be 70 vol% to 90 vol%, 75 vol% to 90 vol%, or 75 vol% to 85 vol%. Within this range, the mechanical properties of the composite membrane may be further improved by the inorganic electrolyte.

According to exemplary embodiments, the composite membrane may be impregnated with a flame retardant polymer (e.g., step S30). For example, the composite membrane may have pores formed between the inorganic electrolyte and the organic binder, and the flame retardant compound may be impregnated into the pores. The flame retardant polymer may be impregnated into the composite membrane to prepare an electrolyte for a secondary battery. For example, the composite membrane formed on the substrate (e.g., a glass substrate or a plastic substrate, etc.) may be separated from the substrate, and the flame retardant polymer may be impregnated into the composite membrane.

In some embodiments, the flame retardant polymer may be impregnated into the composite membrane such that the ratio of the flame retardant polymer content to the inorganic electrolyte content included in the composite membrane is 0.01 to 0.3, 0.05 to 0.3, 0.1 to 0.3, 0.1 to 0.25, or 0.15 to 0.25 based on volume. Accordingly, the ignition stability of the composite membrane may be improved, and the electrical conductivity of the composite membrane may be enhanced while maintaining the structure thereof even at high temperatures.

According to exemplary embodiments, the composite membrane may be impregnated with a mixture including a flame retardant monomer and an electrolyte solution, and the mixture may be cured to impregnate the composite membrane with the flame retardant polymer.

In some embodiments, the composite membrane may be impregnated with a mixture including a flame retardant monomer and an electrolyte solution. For example, the composite membrane may be impregnated with a mixture prepared by immersing the flame retardant monomer in the electrolyte solution. For example, the composite membrane may have pores formed between the inorganic electrolyte and the organic binder, and the mixture may penetrate into and be impregnated into the pores. For example, the composite membrane formed on the substrate (e.g., a glass substrate or a plastic substrate, etc.) may be separated from the substrate, and the mixture may be impregnated into the composite membrane.

In some embodiments, the volume ratio of the flame retardant monomer content to the inorganic electrolyte content included in the composite membrane may be substantially equal to that of the flame retardant polymer content to the inorganic electrolyte content included in the composite membrane. For example, the volume of the flame retardant monomer that decreases or increases upon being formed by polymerization or copolymerization into the flame retardant polymer may be 0.0001 vol% or less, or 0.00001 vol% or less, based on the total volume of the flame retardant monomer.

In some embodiments, the flame retardant monomer may include a phosphorus-containing functional group. For example, the phosphorus-containing functional group may include at least one of a phosphate group, a phosphite group, a phosphonate group, and a phosphazene group. Accordingly, the flame retardancy of the electrolyte for a secondary battery may be improved.

In some embodiments, the flame retardant monomer may include fluorine atoms. Accordingly, the flame retardancy of the electrolyte for a secondary battery may be improved.

In one embodiment, the flame retardant monomer may include both a phosphorus-containing functional group and fluorine atoms. Accordingly, the flame retardancy of the electrolyte for a secondary battery may be further improved.

In some embodiments, the flame retardant monomer may include a thermally reactive functional group and/or a photoreactive functional group. For example, the flame retardant monomer may be a compound containing a thermally reactive functional group that is polymerized by heat. For example, the flame retardant monomer may be a compound containing a photoreactive functional group that is polymerized upon irradiation with light. For example, (meth)acrylate groups, acrylic groups, ether groups, alcohol groups, alkoxy groups, and the like may be used as a thermosetting functional group and/or a photocurable functional group.

In one embodiment, the flame retardant monomer may include a phosphorus-containing functional group and at least one of a thermally reactive functional group and a photoreactive functional group. In one embodiment, the flame retardant monomer may include a phosphorus-containing functional group, fluorine atoms, and at least one of a thermally reactive functional group and a photoreactive functional group.

In some embodiments, the electrolyte solution may include a thermal initiator and/or a photoinitiator to induce thermal curing and/or photocuring of the flame retardant monomer. In one embodiment, the content of the thermal initiator and/or the photoinitiator may be 0.5 parts by weight ("wt parts") to 2 wt parts based on 100 wt parts of the flame retardant monomer included in each electrolyte composition.

For example, the thermal initiator may include azo compounds such as 2,2'-azobis(2-cyanobutane), 2,2'-azobis(methylbutyronitrile), 2,2'-azobisisobutyronitrile (AIBN), azobis dimethyl-valeronitrile (AMVN), or peroxide compounds such as benzoyl peroxide, acetyl peroxide, dilauryl peroxide, di-tert-butyl peroxide, cumyl peroxide, or hydrogen peroxide.

For example, the photoinitiator may include acyl phosphines such as 2-hydroxy-2-methyl-1-phenylpropane-1-one (HMPP), benzoin ether, dialkyl acetophenone, hydroxyl alkylketone, phenyl glyoxylate, benzyl dimethyl ketal, 2,4,6-trimethylbenzoyl-diphenyl phosphine oxide, and α-aminoketones.

In some embodiments, the electrolyte solution may include a lithium salt. The lithium salt may include the above-described lithium salt. Accordingly, the ionic conductivity of the electrolyte for a secondary battery may be improved.

In some embodiments, the electrolyte solution may include an organic solvent. For example, the organic solvent may include carbonate-based organic solvents such as propylene carbonate (PC), ethylene carbonate (EC), diethyl carbonate (DEC), dimethyl carbonate (DMC), ethyl methyl carbonate (EMC), methyl propyl carbonate (MPC), dipropyl carbonate (DPC), and vinylene carbonate (VC), etc.; or solvents such as dimethyl sulfoxide, acetonitrile, dimethoxyethane, diethoxyethane, sulfolane, gamma-butyrolactone, propylene sulfite and tetrahydrofuran. These may be used alone or in combination of two or more thereof.

In one embodiment, the organic solvent may be a carbonate-based organic solvent. Accordingly, the electrical stability and chemical stability of the electrolyte for a secondary battery may be further improved.

In one embodiment, the electrolyte solution may further include an additive. The additive may include a cyclic carbonate compound, a fluorine-substituted cyclic carbonate compound, a sultone compound, a cyclic sulfate compound, a cyclic sulfite compound, a phosphate compound, a borate compound and the like.

The cyclic carbonate compound may include vinylene carbonate, vinyl ethylene carbonate (VEC), etc.

The fluorine-substituted cyclic carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluoro phosphate, etc.

The borate compound may include lithium bis(oxalate) borate, etc.

In some embodiments, the mixture impregnated into the composite membrane may be cured. Accordingly, an electrolyte for a secondary battery may be prepared.

In some embodiments, the flame retardant monomer may be polymerized or copolymerized while the mixture is cured. Accordingly, the electrolyte for a secondary battery may include a flame retardant polymer.

In some embodiments, curing the mixture may include heat-treating the mixture. For example, by heat-curing the mixture, the flame retardant monomer within the composite membrane may be polymerized or copolymerized to form a flame retardant compound.

In some embodiments, the heat treatment may be performed at a temperature of 40 °C to 160 °C, 60 °C to 160 °C, 80 °C to 160 °C, 80 °C to 140 °C, or 80 °C to 120 °C. In one embodiment, the heat treatment may be performed by increasing the temperature from room temperature (e.g., 25 °C) at a rate of 1 °C/min to 10 °C/min, 2 °C/min to 10 °C/min, or 3 °C/min to 10 °C/min.

In some embodiments, the heat treatment may be performed for 30 minutes to 2 hours, 30 minutes to 1.5 hours, or 45 minutes to 1.25 hours.

Within the above temperature and time ranges, the flame retardant monomer within the mixture may be sufficiently polymerized or copolymerized.

In some embodiments, curing the mixture may include irradiating the mixture with light. For example, by photocuring the mixture, the flame retardant monomer within the composite membrane may be polymerized or copolymerized to form a flame retardant polymer. Accordingly, the polymerization or copolymerization reaction of the flame retardant monomer may be performed at a relatively low temperature. Therefore, damage to the composite membrane during high-temperature heat treatment may be prevented.

In some embodiments, the UV photocuring process for the photopolymerization may be performed using light having a wavelength of 250 nm to 400 nm and an intensity of 800 mW/cm² to 1100 mW/cm². In one embodiment, the UV photocuring process may be performed for 5 to 20 seconds. Within the above wavelength and intensity ranges, the flame retardant monomer within the mixture may be sufficiently polymerized or copolymerized.

A secondary battery according to exemplary embodiments may include a cathode, an anode disposed to face the cathode, and an electrolyte layer disposed between the cathode and the anode.

The cathode may include a cathode current collector and a cathode active material layer disposed on at least one surface of the cathode current collector.

The cathode current collector may include stainless steel, nickel, aluminum, titanium, or an alloy thereof. The cathode current collector may also include aluminum or stainless steel having a surface treated with carbon, nickel, titanium, or silver. For example, the cathode current collector may have a thickness of 10 µm to 50 µm.

The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 1 below.

[Formula 1] LiₓNiₐM_{b}O_{2+z}

In Formula 1, x, a, b and z may satisfy 0.9≤x≤1.2, 0.6≤a≤0.99, 0.01≤b≤0.4, and - 0.5≤z≤0.1. As described above, M may include Co, Mn and/or Al.

The chemical structure represented by Formula 1 indicates a bonding relationship between elements included in the layered structure or the crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form a bond, and it should be understood that this case is also included within the chemical structure range represented by Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may serve as an auxiliary active element which contributes to the capacity/output activity of the cathode active material together with Co or Mn, such as Al.

For example, the cathode active material or the lithium-nickel metal oxide may include a layered structure or a crystal structure represented by Formula 1-1 below.

[Formula 1-1] LiₓNiₐMl_{b1}M2_{b2}O_{2+z}

In Formula 1-1, M1 may include Co, Mn and/or Al. M2 may include the above-described auxiliary elements. In Formula 1-1, x, a, b1, b2 and z may satisfy 0.9≤x≤1.2, 0.6≤a≤0.99, 0.01≤b1+b2≤0.4, and -0.5≤z≤0.1.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of the lithium-nickel metal oxide particles, or may penetrate through the surface of the lithium-nickel metal oxide particles to be incorporated into the bonding structure represented by Formula 1 or Formula 1-1 above.

The cathode active material may include a nickel-cobalt-manganese (NCM)-based lithium oxide. In this case, an NCM-based lithium oxide with an increased content of nickel may be used.

Nickel (Ni) may be provided as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

In this regard, as the content of Ni increases, long-term storage stability and cycle life stability of the cathode or the secondary battery may be relatively reduced, and side reactions with the electrolyte may also increase. However, according to exemplary embodiments, by including Co, the cycle life stability and capacity retention characteristics may be improved through Mn while maintaining electrical conductivity.

The content of Ni (e.g., the molar fraction of nickel based on the total molar amount of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., LiFePO₄).

In some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which has a chemical structure or a crystal structure represented by Formula 2.

[Formula 2] p[Li₂MnO₃]·(1-p)[Li_{q}JO₂]

In Formula 2, p and q may satisfy 0<p<1, and 0.9≤q≤1.2, and J may include at least one element selected from Mn, Ni, Co, Fe, Cr, V, Cu, Zn, Ti, Al, Mg and B.

In some embodiments, the cathode active material may be a sodium-based active material or a potassium-based active material. The sodium-based active material or a potassium-based active material may include a layered structure or a crystal structure in which Li of Formula 1, Formula 1-1 and/or Formula 2, described above, is substituted with Na and/or K.

In some embodiments, the cathode active material may be a calcium-based active material. The calcium-based active material may include, for example, a calcium-cobalt active material and a calcium-phosphate active material.

For example, a cathode slurry may be prepared by mixing the cathode active material in a solvent. The cathode slurry may be coated on the cathode current collector, and then dried and roll-pressed to prepare the cathode active material layer. The coating process may be performed using methods such as gravure coating, slot die coating, simultaneous multilayer die coating, imprinting, doctor blade coating, dip coating, bar coating or casting, etc., but is not limited thereto. The cathode active material layer may further include a binder, and optionally may further include an electrolyte, a conductive material, a thickener or the like.

Solvents used in the preparation of the cathode active material layer may include, for example, N-methyl-2-pyrrolidone (NMP), dimethylformamide (DMF), dimethylacetamide (DMA), N,N-dimethylaminopropylamine (DMAPA), ethylene oxide (EO), tetrahydrofuran (THF), etc.

In one embodiment, the electrolyte included in the cathode active material layer may be the above-described electrolyte for a secondary battery. In one embodiment, the electrolyte included in the cathode active material layer may be the above-described inorganic electrolyte, but the electrolyte included in the cathode active material layer may be equal to or different from the inorganic electrolyte included in the composite membrane. For example, the secondary battery may be provided as an all-solid-state battery including the above-described electrolyte or inorganic electrolyte.

The binder may include at least one binder selected from the group consisting of a polyvinyl compound-based binder, a cellulose-based binder, an acrylic polymer-based binder, and a copolymer resin binder.

The binder may include, for example, polyvinyl alcohol (PVA), polyvinyl butyral (PVB), polyvinylpyrrolidone (PVP), carboxymethylcellulose (CMC), vinylpyrrolidone/vinylacetate (VP/VA) copolymer resin, polyvinylidene fluoride (PVDF), poly(vinylidene fluoride-co-hexafluoropropylene), polyacrylonitrile, polymethyl methacrylate, acrylonitrile-butadiene rubber (NBR), polybutadiene rubber (BR), styrene-butadiene rubber (SBR) and the like. In one embodiment, a PVDF-based binder may be used as the cathode binder.

The conductive material may be added to enhance the conductivity and/or mobility of lithium ions or electrons of the cathode active material layer. For example, the conductive material may include carbon-based conductive materials such as graphite, carbon black, acetylene black, Ketjen black, graphene, carbon nanotubes, vapor-grown carbon fibers (VGCFs), carbon fibers, and/or metal-based conductive materials, including perovskite materials, such as tin, tin oxide, titanium oxide, LaSrCoO₃, and LaSrMnO₃, but is not limited thereto.

The cathode active material layer may further include a thickener and/or a dispersant. In one embodiment, the cathode active material layer may include a thickener such as carboxymethyl cellulose (CMC).

The anode may include an anode current collector and an anode active material layer disposed on at least one surface of the anode current collector.

The anode current collector may include, for example, a copper foil, a nickel foil, a stainless steel foil, a titanium foil, a nickel foam, a copper foam, a polymer substrate coated with conductive metal and the like. The anode current collector may have a thickness of, for example, 10 µm to 50 µm, but is not limited thereto.

The anode active material layer may include an anode active material. As the anode active material, a material capable of intercalating and deintercalating lithium ions may be used. For example, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material, etc. may be used.

Examples of the amorphous carbon may include hard carbon, soft carbon, coke, mesocarbon microbead (MCMB), mesophase pitch-based carbon fiber (MPCF) or the like.

Examples of the crystalline carbon may include graphite-based carbon such as natural graphite, artificial graphite, graphitized coke, graphitized MCMB, graphitized MPCF or the like

The lithium metal may include pure lithium metal or lithium metal having a protective layer formed thereon for suppressing dendrite growth, etc. In one embodiment, a lithium metal-containing layer deposited or coated on the anode current collector may be used as the anode active material layer. In one embodiment, a lithium thin film layer may be used as the anode active material layer.

Elements included in the lithium alloy may include aluminum, zinc, bismuth, cadmium, antimony, silicon, lead, tin, gallium or indium, etc.

The silicon-containing material may provide further increased capacity characteristics. The silicon-containing material may include Si, SiOx (0<x<2), a metal-doped SiOx (0<x<2), a silicon-carbon composite, etc. The metal may include lithium and/or magnesium, and the metal-doped SiOx (0<x<2) may include a metal silicate.

For example, an anode slurry may be prepared by mixing the anode active material in a solvent. The anode slurry may be coated/deposited to the anode current collector, then dried and roll-pressed to prepare the anode active material layer. The coating process may be performed using substantially the same method as the method of preparing the cathode active material layer. The anode active material layer may further include a binder, and optionally may further include an electrolyte, a conductive agent, a thickener, etc.

In some embodiments, the anode may include the anode active material layer in the form of a lithium metal formed through a deposition/coating process.

The solvent for the anode active material layer may include, for example, water, pure water, deionized water, distilled water, ethanol, isopropanol, methanol, acetone, n-propanol, t-butanol, etc.

In one embodiment, the electrolyte included in the anode active material layer may be the above-described electrolyte for a secondary battery. In one embodiment, the electrolyte included in the anode active material layer may be the above-described inorganic electrolyte, but the electrolyte included in the anode active material layer may be equal to or different from the inorganic electrolyte included in the composite membrane. For example, the secondary battery may be provided as an all-solid-state battery including the above-described electrolyte or inorganic electrolyte.

The above-described materials that can be used when fabricating the cathode as the binder, conductive material and thickener may also be used.

In some embodiments, a styrene-butadiene rubber-based binder, carboxymethyl cellulose, polyacrylic acid-based binder, poly(3,4-ethylenedioxythiophene (PEDOT)-based binder, and the like may be used as an anode binder.

According to exemplary embodiments, an electrolyte layer may be interposed between the cathode and the anode. The electrolyte layer may be a solid electrolyte layer. For example, the solid electrolyte layer may be an electrolyte layer including the above-described electrolyte.

According to exemplary embodiments, an electrode cell may be defined by the cathode, the anode and the solid electrolyte layer, and a plurality of the electrode cells may be stacked to form an electrode assembly. For example, the electrode assembly may be formed by winding, lamination, folding or the like.

For example, electrode tabs (cathode tabs and anode tabs) may protrude from the cathode current collector and the anode current collector, respectively, and may extend to one side of a case. The electrode tabs may be fused together with the one side of the case and connected to electrode leads (a cathode lead and an anode lead) that extend or are exposed to the outside of the case.

For example, a pouch-type case, a prismatic case, a cylindrical case, or a coin-type case, etc. may be used as the case.

Hereinafter, embodiments of the present disclosure will be further described with reference to specific experimental examples. However, the examples and comparative examples included in the experimental examples are provided merely for illustrative purposes of the present disclosure and are not intended to limit the scope of the appended claims. It will be apparent to those skilled in the art that various changes and modifications can be made within the scope and spirit of the present disclosure, and such changes and modifications are to be regarded as falling within the scope of the appended claims.

### Examples and Comparative Examples

### Example 1

### Preparation of electrolyte for a secondary battery

A mixed slurry was prepared by mixing LLZTO (Li_{6.4}La₃Zr_{1.4}Ta_{0.6}O₁₂) as an inorganic electrolyte and polyvinyl butyral (PVB) as an organic binder at a volume ratio of 4:1 with a mixed solvent including propylene carbonate (PC) and dimethyl sulfoxide (DMSO) at a volume ratio of 1:1.

The mixed slurry was cast onto a polyethylene terephthalate (PET) film and then dried at 250 °C for 1 hour to form a composite membrane.

The content of the inorganic electrolyte, based on the total volume of the composite membrane, was 80 vol%.

A mixture was prepared by mixing a flame retardant monomer represented by Formula 3 below with a 1.0 M LiTFSi solution (a mixed solvent of EC/EMC at a volume ratio of 25:75).

The composite membrane was separated from the PET film, and the mixture was impregnated into the composite membrane at a volume ratio of mixture to composite membrane of 10:1. The ratio of the flame retardant monomer to the inorganic electrolyte was 0.2 based on volume.

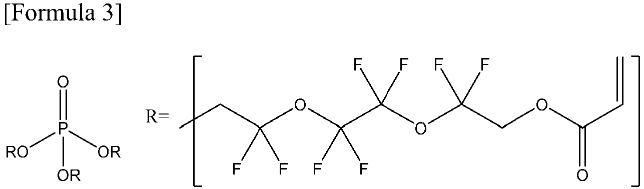

Thereafter, the mixture was heated at a rate of 5 °C/min and heat-cured at 80 °C for 1 hour to prepare an electrolyte for a secondary battery.

### Examples 2 to 9

Electrolytes for a secondary battery were prepared in the same manner as in Example 1, except that, during the preparation of the electrolyte for a secondary battery, the content of the inorganic material based on the total volume of the composite membrane and the volume ratio of the flame retardant monomer content to the inorganic electrolyte content were changed as shown in Table 1 below.

### Comparative Example 1

An electrolyte for a secondary battery was prepared in the same manner as in Example 1, except that, during the preparation of the electrolyte for a secondary battery, the flame retardant monomer was not included in the mixture.

### Comparative Examples 2 to 7

Electrolytes for a secondary battery were prepared in the same manner as in Example 1, except that, during the preparation of the electrolyte for a secondary battery, the content of the inorganic material based on the total volume of the composite membrane and the volume ratio of the flame retardant monomer content to the inorganic electrolyte content were changed as shown in Table 1 below.

**[TABLE 1]**

| | Composition of composite membrane | | | Volume ratio of flame retardant monomer content to inorganic electrolyte content |
|---|---|---|---|---|
| | Inorganic electrolyte (vol%) | Organic binder (vol%) | Volume ratio of flame retardant monomer content to inorganic electrolyte content | |
| Example 1 | 80 | 20 | 0.25 | 0.2 |
| Example 2 | 68 | 32 | 0.47 | 0.2 |
| Example 3 | 92 | 8 | 0.09 | 0.2 |
| Example 4 | 80 | 20 | 0.25 | 0.005 |
| Example 5 | 80 | 20 | 0.25 | 0.4 |
| Example 6 | 92 | 8 | 0.09 | 0.005 |
| Example 7 | 92 | 8 | 0.09 | 0.4 |
| Example 8 | 68 | 32 | 0.47 | 0.005 |
| Example 9 | 68 | 32 | 0.47 | 0.4 |
| Comparative Example 1 | 80 | 20 | 0.25 | - |
| Comparative Example 2 | 40 | 60 | 1.5 | 0.2 |
| Comparative Example 3 | 96 | 4 | 0.04 | 0.2 |
| Comparative Example 4 | 40 | 60 | 1.5 | 0.005 |
| Comparative Example 5 | 40 | 60 | 1.5 | 0.4 |
| Comparative Example 6 | 96 | 4 | 0.04 | 0.005 |
| Comparative Example 7 | 96 | 4 | 0.04 | 0.4 |

### Experimental Example 1: Evaluation of electrolyte

### (1) Cohesive force evaluation

The cohesive force between inorganic electrolyte particles included in the electrolyte for a secondary battery prepared according to the above-described examples and comparative examples was measured.

Specifically, the cohesive force was measured using a SAICAS instrument, defined as the force required to break contact between inorganic electrolyte particles at a depth of 10 µm from the surface of the electrolyte for a secondary battery.

### (2) Flame retardancy evaluation - combustion test

The electrolytes for a secondary battery prepared according to the above-described examples and comparative examples were subjected to combustion for 5 minutes to evaluate whether combustion occurred.

Combustion was evaluated as follows:
∘: Combustion area less than 5%
△: Combustion area from 5% to 20%
×: Combustion area greater than 20%, or the composite membrane shape could not be maintained during combustion.

The evaluation results are shown in Table 2 below.

**[TABLE 2]**

| Classification | Cohesive force evaluation (F_{H}, N) | Combustion test |
|---|---|---|
| Example 1 | 0.08 | ○ |
| Example 2 | 0.04 | △ |
| Example 3 | 0.02 | △ |
| Example 4 | 0.08 | △ |
| Example 5 | 0.08 | ○ |
| Example 6 | 0.02 | △ |
| Example 7 | 0.02 | △ |
| Example 8 | 0.04 | △ |
| Example 9 | 0.04 | △ |
| Comparative Example 1 | 0.04 | × |
| Comparative Example 2 | - | × |
| Comparative Example 3 | - | × |
| Comparative Example 4 | - | × |
| Comparative Example 5 | - | × |
| Comparative Example 6 | - | × |
| Comparative Example 7 | - | × |

Referring to Table 2, the examples in which the content of the inorganic electrolyte based on the total volume of the composite membrane is 50 vol% to 95 vol%, may exhibit excellent flame retardancy, with a combustion area of 20% or less during combustion, while maintaining the shape of the composite membrane by the organic binder and ensuring sufficient contact between the inorganic electrolytes to achieve an interparticle cohesive force of 0.01 N or more.

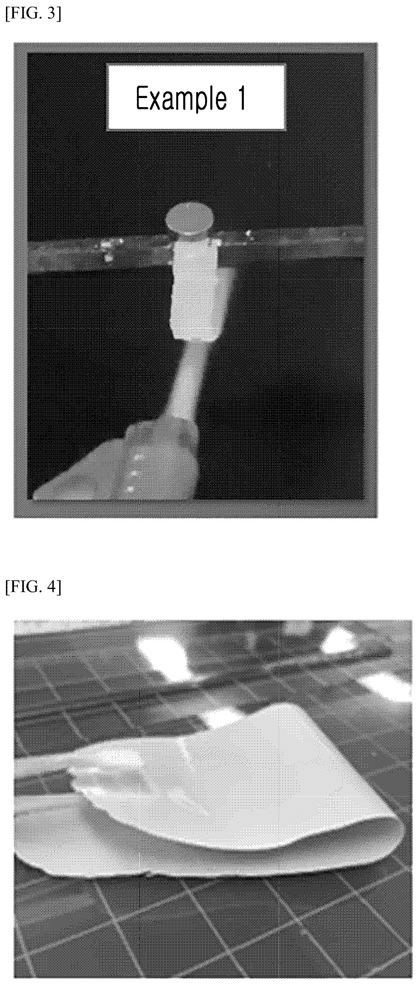

FIG. 3 is a photograph showing combustion of the electrolyte for a secondary battery of exemplary examples during the combustion test. Specifically, FIG. 3 is a photograph showing combustion of the electrolyte for a secondary battery of Example 1 during the combustion test.

FIG. 4 is a photograph showing the electrolyte for a secondary battery of exemplary examples after combustion during the combustion test. Specifically, FIG. 4 is a photograph showing the electrolyte for a secondary battery after combustion test of the electrolyte for a secondary battery during the combustion test of Example 1.

Referring to FIGS. 3 and 4, in Example 1, where the volume ratio of the inorganic electrolyte and organic binder was adjusted to 4:1 and the volume ratio of the flame retardant monomer content to the inorganic electrolyte content was adjusted to 0.2, the shape of the composite membrane was maintained even after the combustion test.

In the comparative examples, which did not include a flame retardant monomer or a flame retardant polymer obtainable by polymerizing the flame retardant monomer, or where the volume of the inorganic electrolyte was adjusted to less than 50 vol% or greater than 95 vol% based on the total volume of the composite membrane, the combustion area exceeded 20% after combustion.

In Comparative Example 1, which did not include a flame retardant monomer or a flame retardant polymer obtainable by polymerizing the flame retardant monomer, the combustion area exceeded 20% after the combustion test.

In Comparative Examples 2, 4 and 5, where the volume of the inorganic electrolyte was reduced to less than 50 vol% based on the total volume of the composite membrane, no contact between the inorganic electrolyte particles occurred, making cohesive force evaluation impossible. In addition, after the combustion test, voids formed between the inorganic electrolyte particles due to the combustion of the organic binder, thereby eliminating interparticle contact and causing the combustion area to exceed 20%.

In Comparative Examples 3, 6 and 7, where the inorganic oxide content exceeded 95 vol%, the high inorganic oxide content prevented the formation of a thin-film composite membrane. Moreover, because the composite membrane had difficulty maintaining a thin-film form, the combustion area exceeded 20% after combustion.

## Claims

1. An electrolyte for a secondary battery comprising:
a lithium salt;
a composite membrane comprising an inorganic electrolyte and an organic binder; and
a flame retardant polymer electrolyte,
wherein the content of the inorganic electrolyte, based on the total volume of the composite membrane, is 50% by volume to 95% by volume.

2. The electrolyte for a secondary battery according to claim 1, wherein the inorganic electrolyte comprises an oxide-based solid electrolyte.

3. The electrolyte for a secondary battery according to claim 1, wherein the content of the organic binder, based on the total volume of the composite membrane, is 5% by volume to 50% by volume.

4. The electrolyte for a secondary battery according to claim 1, wherein the volume ratio of the content of the organic binder to the content of the inorganic electrolyte is 0.05 to 0.5.

5. The electrolyte for a secondary battery according to claim 1, wherein the volume ratio of the content of the flame retardant compound to the content of the inorganic electrolyte is 0.01 to 0.3.

6. The electrolyte for a secondary battery according to claim 1, wherein the flame retardant compound comprises at least one of a phosphorus-containing functional group and fluorine atoms.

7. The electrolyte for a secondary battery according to claim 6, wherein the phosphorus-containing functional group comprises at least one of a phosphate group, a phosphite group, a phosphonate group, and a phosphazene group.

8. A lithium secondary battery comprising:
a cathode;
an anode disposed to face the cathode; and
an electrolyte layer disposed between the cathode and the anode which comprises the electrolyte for a secondary battery according to claim 1.

9. A method for preparing an electrolyte for a secondary battery, comprising:
preparing a mixed slurry by mixing an inorganic electrolyte, an organic binder, and a solvent;
drying the mixed slurry to prepare a composite membrane; and
impregnating the composite membrane with a flame retardant polymer electrolyte,
wherein the volume ratio of the content of the organic binder to the content of the inorganic electrolyte is 0.01 to 0.5.

10. The method for preparing an electrolyte for a secondary battery according to claim 9, wherein the inorganic electrolyte comprises an oxide-based solid electrolyte.

11. The method for preparing an electrolyte for a secondary battery according to claim 9, wherein the content of the inorganic electrolyte, based on the total volume of the composite membrane, is 50% by volume to 95% by volume.

12. The method for preparing an electrolyte for a secondary battery according to claim 9, wherein the step of impregnating the composite membrane with a flame retardant polymer electrolyte comprises impregnating the composite membrane with a mixture comprising a flame retardant monomer and an electrolyte solution, and curing the mixture.

13. The method for preparing an electrolyte for a secondary battery according to claim 12, wherein the electrolyte solution comprises a lithium salt.

14. The method for preparing an electrolyte for a secondary battery according to claim 12, wherein the mixture further comprises a thermal initiator, and
curing the mixture comprises heat-treating the mixture.

15. The method for preparing an electrolyte for a secondary battery according to claim 9, wherein the mixture further comprises a photoinitiator, and
curing the mixture comprises irradiating the mixture with light.
